# EUROPEAN PATENT APPLICATION

(11) **EP 4 576 881 A1**
(43) Date of publication of application: **25.06.2025**
(21) Application number: 23864430.6
(22) Date of filing: 28.06.2023
(51) Int. Cl.: H04W 52/00

(54) **TRANSMITTING POWER ADJUSTMENT METHOD AND APPARATUS**

(30) Priority: 16.09.2022 CN 202211131945
(71) Applicant: Huawei Technologies Co., Ltd., Shenzhen, Guangdong 518129 (CN)
(72) Inventor: HUANG, Xin, Shenzhen, Guangdong 518129 (CN); HU, Jianyue, Shenzhen, Guangdong 518129 (CN); YANG, Pei, Shenzhen, Guangdong 518129 (CN); YU, Yi, Shenzhen, Guangdong 518129 (CN)
(74) Representative: Gill Jennings & Every LLP
(86) International application number: PCT/CN2023/103506
(87) International publication number: WO 2024/055691

(57) **Abstract**

This application proposes a transmit power adjustment method and an apparatus. The method includes: obtaining a first signal sequence, where the first signal sequence includes a valid signal sequence; and controlling a first module and a second module to adjust transmit power of the first signal sequence, and sending the first signal sequence. The first module is configured to coarsely adjust the transmit power of the first signal sequence, the second module is configured to finely adjust the transmit power of the first signal sequence, and transmit power corresponding to the valid signal sequence reaches a first transmit power threshold and/or a second transmit power threshold. Therefore, it can be learned that, after obtaining the first signal sequence, a transmitter (or the apparatus) may steadily adjust the transmit power of the first signal sequence by using the first module and the second module, and correspondingly send the valid signal sequence in the first signal sequence when the transmit power reaches the first transmit power threshold and/or the second transmit power threshold. This can ensure transmission quality of the valid signal sequence.

## Description

### CROSS-REFERENCE TO RELATED APPLICATIONS

This application claims priority to Chinese Patent Application No. 202211131945.8, filed with the China National Intellectual Property Administration on September 16, 2022, and entitled "TRANSMIT POWER ADJUSTMENT METHOD AND APPARATUS", which is incorporated herein by reference in its entirety.

### TECHNICAL FIELD

This application relates to the field of communication technologies, and in particular, to a transmit power adjustment method and an apparatus.

### BACKGROUND

A radio determination satellite system (radio determination satellite system, RDSS) is a unique service function of a BeiDou satellite navigation system, and can provide a two-way short message information service (that is, a satellite communication function). Usually, a user may implement positioning based on a satellite signal sent by a receiver (receiver, RX) of the RDSS, and may further send a signal or message to a satellite through a transmitter (transmitter, TX) link of the RDSS, and the satellite forwards the signal or message to a ground station. However, when the user transmits the signal to the satellite via the RDSS TX, transmit power usually cannot be less than 3.5 dBW. Otherwise, the satellite fails to receive the signal from the user. However, if the transmit power is adjusted to be excessively high, power consumption of the transmitting device is high, and interference to a surrounding device is also caused.

For how to effectively adjust the transmit power of the signal sent by the RDSS TX, a current solution includes a manner of adjusting the transmit power by fixing an RDSS gain and a manner of adjusting the transmit power by controlling the RDSS gain. The manner of adjusting the transmit power by fixing the RDSS gain means that the RDSS TX transmits the signal from the user at constant transmit power. However, when an environment in which the transmitted signal is located changes, quality of the transmitted signal is severely affected. In the manner of adjusting the transmit power by controlling the RDSS gain, the RDSS TX may determine, based on a signal carrier-to-noise ratio obtained by the RDSS RX, whether the transmit power of the RDSS TX needs to be adjusted, and use a main control unit to adjust a value of an attenuator (that is, control a transmit gain), to adjust the transmit power. However, in this manner, an additional circuit needs to be added to the RDSS TX to implement dynamic gain compensation. This increases chip complexity, and also increases an additional circuit area and power consumption overheads.

Therefore, a transmit power adjustment method urgently needs to be proposed, so that transmit power of a signal can be adaptively adjusted in different application environments, to ensure communication quality of the transmitted signal.

### SUMMARY

A transmit power adjustment method and an apparatus are provided, so that transmit power of a signal can be adaptively adjusted, to ensure communication quality of the transmitted signal.

According to a first aspect, this application provides a transmit power adjustment method. The method may be applied to an RDSS. The method may be performed by a transmitter (for example, an RDSS TX) of the radio determination satellite system, or may be performed by a component (for example, a processor, a chip, or a chip system) in the transmitter (for example, the RDSS TX). This is not specifically limited in this application. The method may specifically include the following steps: obtaining a first signal sequence, where the first signal sequence includes a valid signal sequence; and controlling a first module and a second module to adjust transmit power of the first signal sequence, and sending the first signal sequence. The first module is configured to coarsely adjust the transmit power of the first signal sequence, and the second module is configured to finely adjust the transmit power of the first signal sequence. Transmit power corresponding to the valid signal sequence reaches a first transmit power threshold and/or a second transmit power threshold.

In solutions of this application, the first signal sequence may include the valid signal sequence and an invalid signal sequence. The valid signal sequence corresponds to a valid data stream. The invalid signal sequence may be used to assist in adjusting transmit power of a valid signal to adjust a transmitted signal, and corresponds to an invalid data stream. For example, the invalid signal sequence may be a pseudo-random codeword.

In this embodiment of this application, the transmitter (or an apparatus) obtains the first signal sequence, where the first signal sequence includes the valid signal sequence; and then controls the first module and the second module to adjust the transmit power of the first signal sequence and sends the first signal sequence. The first module is configured to coarsely adjust the transmit power of the first signal sequence, and the second module is configured to finely adjust the transmit power of the first signal sequence. The transmit power corresponding to the valid signal sequence reaches the first transmit power threshold and/or the second transmit power threshold. Therefore, it can be learned that, in the solutions of this application, after obtaining the first signal sequence, the transmitter (or the apparatus) may steadily adjust, by using the first module and the second module, the transmit power of sending the first signal sequence, and correspondingly send the valid signal sequence in the first signal sequence when the transmit power reaches the first transmit power threshold and/or the second transmit power threshold. This can ensure stability of the transmit power of the valid signal sequence, and can further ensure transmission quality of the valid signal sequence.

In an implementation, the first transmit power threshold and the second transmit power threshold are determined based on assistance information of a communication satellite. The assistance information includes signal feedback information of the communication satellite. The method further includes: obtaining the assistance information of the communication satellite by using a first receiving module. The first receiving module is a receiving module of a global navigation satellite system GNSS or a receiving module of a radio navigation satellite system RNSS.

For example, the communication satellite is a GEO satellite, and assistance information of the GEO satellite is strength of a signal received by the terminal device from the GEO satellite. Optionally, a receiver of the RNSS may receive assistance information from another communication satellite within a constraint range like a same elevation angle or azimuth angle of the GEO satellite, to select assistance information of an optimal communication satellite. Assistance information of each satellite is used to determine strength of a signal received by the terminal device from the satellite. Alternatively, assistance information of each satellite may be strength of a signal received by the terminal device from the satellite. Further, the first transmit power threshold and the second transmit power threshold are determined based on the optimal assistance information of the communication satellite.

In this implementation, the first transmit power threshold and the second transmit power threshold may be effectively determined based on the assistance information of the communication satellite acquired by the receiving module of the global navigation satellite system GNSS or the receiving module of the radio navigation satellite system RNSS. Further, the transmit power may be effectively adjusted based on the first transmit power threshold and the second transmit power threshold.

In an implementation, the first transmit power threshold and the second transmit power threshold are preset.

In this implementation, the first transmit power threshold and the second transmit power threshold are preset based on a requirement, and then the transmit power is effectively adjusted based on the preset transmit power thresholds.

In an implementation, the method further includes: obtaining feedback information of the valid signal sequence by using a second receiving module; and adjusting, based on the feedback information of the valid signal sequence, the transmit power of the valid signal sequence in real time by controlling a parameter change of the second module by using the second module. The second receiving module is one of the following: a receiving module of the radio determination satellite system RDSS, a receiving module of the global navigation satellite system GNSS, or a receiving module of the radio navigation satellite system RNSS.

In this implementation, an existing receiving module or receiver (for example, a receiving module or receiver of the RDSS, a receiving module or receiver of the GNSS, or a receiving module or receiver of the RNSS) is multiplexed to obtain the feedback information transmitted by the valid signal sequence, and the transmit power is finely adjusted based on the feedback information of the valid signal sequence in real time, so that stability or accuracy of sending the valid signal sequence can be ensured, and transmission quality of the valid signal sequence can be ensured.

In an implementation, adjusting the transmit power of the first signal sequence by using the first module and the second module includes: controlling a parameter change of the first module to increase the transmit power of the first signal sequence; and when the transmit power of the first signal sequence reaches the first transmit power threshold, controlling the parameter change of the second module to increase the transmit power of the first signal sequence; or controlling the parameter change of the second module to reduce the transmit power of the first signal sequence; and when the transmit power of the first signal sequence reaches the second transmit power threshold, controlling a parameter change of the first module to reduce the transmit power of the first signal sequence.

In this implementation, the transmit power is steadily adjusted in a manner of coarse adjustment and fine adjustment by controlling changes of parameters (or gains) of the first module and the second module.

In an implementation, the first module is a pre-power amplifier module, and the second module is a digital scaling module.

In this implementation, the transmit power can be adjusted effectively and accurately.

In an implementation, the first signal sequence further includes the invalid signal sequence, and the transmit power corresponding to the invalid signal sequence is less than the first transmit power threshold and/or the second transmit power threshold.

In this implementation, the transmitter (or the apparatus) correspondingly sends the invalid signal when the transmit power does not reach the first transmit power threshold and/or the second transmit power threshold, so that sent signals are continuous and there is no blank timeslot in the entire sending period.

In an implementation, the invalid signal sequence is a pseudo-random sequence.

In this implementation, a pseudo-random sequence (that is, an invalid signal sequence) is added before and after the valid signal sequence to form a continuous first signal sequence, to complete increase/decrease adjustment of the transmit power during sending of the pseudo-random codeword. In addition, the pseudo-random codeword can be used to avoid strong interference caused by strong monophonic tones to a surrounding telecommunication device.

According to a second aspect, this application provides a transmit power adjustment system, including a receiver, a controller, a transmitter, a first module, and a second module. The receiver is configured to obtain a first signal sequence. The controller is configured to control the first module and the second module to adjust transmit power of the first signal sequence and send the first signal sequence by using the transmitter. The first module is configured to coarsely adjust the transmit power of the first signal sequence, and the second module is configured to finely adjust the transmit power of the first signal sequence. The first signal sequence includes a valid signal sequence, and transmit power corresponding to the valid signal sequence reaches a first transmit power threshold and/or a second transmit power threshold.

In a possible implementation, the first transmit power threshold and the second transmit power threshold are determined based on assistance information of a communication satellite, and the assistance information includes signal feedback information of the communication satellite. The receiver is further configured to obtain the assistance information of the communication satellite by using a first receiver, and the first receiver is a receiver of a global navigation satellite system GNSS or a receiver of a radio navigation satellite system RNSS.

In a possible implementation, the first transmit power threshold and the second transmit power threshold are preset.

In a possible implementation, the receiver is further configured to obtain feedback information of the valid signal sequence by using a second receiver. The controller is further configured to: control a parameter change of the second module to adjust, in real time based on the feedback information of the valid signal sequence, transmit power at which the transmitter sends the valid signal sequence. The second receiver is one of the following:
a receiver of a radio determination satellite system RDSS, a receiver of the global navigation satellite system GNSS, and a receiver of the radio navigation satellite system RNSS.

In a possible implementation, the first module is a pre-power amplifier module, and the second module is a digital scaling module.

In a possible implementation, when adjusting, by using the first module and the second module, the transmit power at which the transmitter sends the first signal sequence, the controller is specifically configured to:
control a parameter change of the first module to increase the transmit power of the first signal sequence; and when the transmit power of the first signal sequence reaches the first transmit power threshold, control the parameter change of the second module to increase the transmit power of the first signal sequence; or control the parameter change of the second module to reduce the transmit power of the first signal sequence; and when the transmit power of the first signal sequence reaches the second transmit power threshold, control a parameter change of the first module to reduce the transmit power of the first signal sequence.

In a possible implementation, the first signal sequence further includes an invalid signal sequence, and transmit power corresponding to the invalid signal sequence is less than the first transmit power threshold and/or the second transmit power threshold.

In a possible implementation, the invalid signal sequence is a pseudo-random sequence.

According to a third aspect, an embodiment of this application further provides a communication apparatus. The communication apparatus may be configured to perform the method in the first aspect. The communication apparatus may be a transmitting apparatus, or may be a component (for example, a chip, a chip system, or a circuit) in the transmitting apparatus, or an apparatus that can be used in matching with the transmitting apparatus.

In a possible implementation, the communication apparatus may include modules or units that one-to-one correspond to the methods/operations/steps/actions described in the first aspect. The module or unit may be a hardware circuit or software, or may be implemented as a hardware circuit in combination with software. In a possible implementation, the communication apparatus may include a processing module and a transceiver module. The processing module is configured to invoke the transceiver module to perform a receiving function and/or a sending function.

In a possible implementation, the communication apparatus includes a receiving unit, a processing unit, and a sending unit. The processing unit may be configured to invoke the receiving unit to perform a receiving function, and/or invoke the sending unit to perform a sending function. The receiving unit is configured to obtain a first signal sequence, where the first signal sequence includes a valid signal sequence. The processing unit is configured to: control a first module and a second module to adjust transmit power of the first signal sequence, and send the first signal sequence by using the sending unit. The first module is configured to coarsely adjust the transmit power of the first signal sequence, and the second module is configured to finely adjust the transmit power of the first signal sequence. Transmit power corresponding to the valid signal sequence reaches a first transmit power threshold and/or a second transmit power threshold.

In a possible implementation, the first transmit power threshold and the second transmit power threshold are determined based on assistance information of a communication satellite, and the assistance information includes signal feedback information of the communication satellite.

The receiving unit is further configured to obtain the assistance information of the communication satellite by using a first receiving module. The first receiving module is a receiving module of a global navigation satellite system GNSS or a receiving module of a radio navigation satellite system RNSS.

In a possible implementation, the first transmit power threshold and the second transmit power threshold are preset.

In a possible implementation, the receiving unit is further configured to obtain feedback information of the valid signal sequence by using a second receiving module. The processing unit is further configured to adjust, based on the feedback information of the valid signal sequence, transmit power of the valid signal sequence in real time by controlling a parameter change of the second module. The second receiving module is one of the following: a receiving module of a radio determination satellite system RDSS, a receiving module of the global navigation satellite system GNSS, and a receiving module of the radio navigation satellite system RNSS.

In a possible implementation, when adjusting the transmit power of the first signal sequence by using the first module and the second module, the processing unit is specifically configured to: control a parameter change of the first module to increase the transmit power of the first signal sequence; and when the transmit power of the first signal sequence reaches the first transmit power threshold, control the parameter change of the second module to increase the transmit power of the first signal sequence; or control the parameter change of the second module to reduce the transmit power of the first signal sequence; and when the transmit power of the first signal sequence is less than the second transmit power threshold, control a parameter change of the first module to reduce the transmit power of the first signal sequence.

In a possible implementation, the first module is a pre-power amplifier module, and the second module is a digital scaling module.

In a possible implementation, the first signal sequence further includes an invalid signal sequence, and transmit power corresponding to the invalid signal sequence is less than the first transmit power threshold and/or the second transmit power threshold.

In a possible implementation, the invalid signal sequence is a pseudo-random sequence.

According to a fourth aspect, an embodiment of this application provides a communication apparatus. The apparatus includes at least one processor and an interface circuit. The interface circuit is configured to provide an input and/or output of a program or instructions for the at least one processor. The at least one processor is configured to execute the program or the instructions, so that the communication apparatus can implement the method provided in the first aspect or any possible implementation.

According to a fifth aspect, an embodiment of this application provides a computer storage medium. The storage medium stores a software program, and when the software program is read and executed by one or more processors, the method provided in the first aspect or any possible implementation of the first aspect may be implemented.

According to a sixth aspect, an embodiment of this application provides a computer program product including instructions. When the instructions are run on a computer, the computer is enabled to perform the method according to the first aspect or any possible implementation of the first aspect.

According to a seventh aspect, an embodiment of this application provides a chip system. The chip system includes a processor, configured to support a device in implementing functions in the first aspect.

In a possible design, the chip system further includes a memory. The memory is configured to store program instructions and data that are necessary for the network device. The chip system may include a chip, or may include a chip and another discrete component.

According to an eighth aspect, an embodiment of this application further provides a chip system. The chip system includes a processor and an interface. The interface is configured to obtain a program or instructions, and the processor is configured to invoke the program or the instructions to implement or support a device in implementing functions in the first aspect.

In a possible design, the chip system further includes a memory. The memory is configured to store program instructions and data that are necessary for the terminal device. The chip system may include a chip, or may include a chip and another discrete component.

For technical effect that can be achieved in the second aspect and the third aspect or any possible implementations of the second aspect and the third aspect, refer to the descriptions of the technical effect that can be achieved in the first aspect and any possible implementation of the first aspect. Details are not described herein again.

### BRIEF DESCRIPTION OF DRAWINGS

FIG. 1A shows a communication scenario to which transmit power adjustment is applied according to an embodiment of this application;
FIG. 1B is a diagram of a communication system to which a transmit power adjustment method is applicable according to an embodiment of this application;
FIG. 2A is a diagram of a structure of an RDSS according to an embodiment of this application;
FIG. 2B is a diagram of a structure of another RDSS according to an embodiment of this application;
FIG. 2C is a diagram of a structure of still another RDSS according to an embodiment of this application;
FIG. 3 is a schematic flowchart of a transmit power adjustment method according to an embodiment of this application;
FIG. 4 is a diagram of an RDSS transmit power change according to an embodiment of this application;
FIG. 5A and FIG. 5B are a schematic flowchart of a first specific embodiment according to an embodiment of this application;
FIG. 6A and FIG. 6B are a schematic flowchart of a second specific embodiment according to an embodiment of this application;
FIG. 7A and FIG. 7B are a schematic flowchart of a third specific embodiment according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of an apparatus structure of a chip according to an embodiment of this application.

### DESCRIPTION OF EMBODIMENTS

Embodiments of this application provide a transmit power adjustment method and an apparatus, so that transmit power of a signal can be adaptively adjusted, to ensure communication quality of a transmitted signal. The method and the apparatus in this application are based on a same technical concept, and problem-resolving principles of the method and the apparatus are similar. Therefore, mutual reference may be made to implementations of the apparatus and the method, and repeated parts are not described again.

The following clearly and completely describes technical solutions in embodiments of this application with reference to accompanying drawings in embodiments of this application. Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

In the description of this application, "at least one (type)" means one or more (types), and "a plurality of (types)" means two or more (types).

To describe the technical solutions in embodiments of this application more clearly, an application scenario of a radio determination satellite system RDSS related to this application is first described.

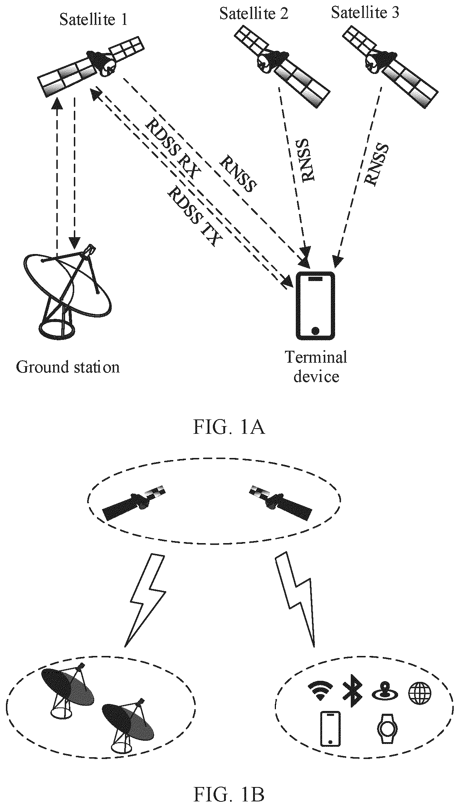

In the application scenario shown in FIG. 1A, the satellite communication system includes satellites (such as a satellite 1, a satellite 2, and a satellite 3), a terminal device, and a ground station. Quantities of satellites, terminal devices, and ground stations in the communication system are not specifically limited. Because the RDSS system may provide a bidirectional short packet information service (that is, a satellite communication function), generally, the terminal device may separately communicate with the satellite 1, the satellite 2, and the satellite 3 by using the RDSS. For example, the terminal device may implement positioning based on a signal of the satellite 1 sent by a receiver (RDSS RX) of the RDSS. The terminal device may further send a signal or a message to the satellite 1 through a transmitter (RDSS TX) link of the RDSS, and then the satellite 1 forwards the signal or the message to the ground station, or the ground station sends communication information to the satellite 1. The terminal device may parse, through the RDSS RX link, the communication information that is broadcast by the ground station and that is received by the satellite.

It can be learned from the foregoing that, in the service of the RDSS, the terminal device transmits an L-band radio frequency signal to the satellite 1, and parameters such as a signal radio frequency signal parameter and modulation data of the L-band radio frequency signal directly affect a success rate of the service of the RDSS. In the current technology, however, when the terminal device transmits a signal to the satellite through the RDSS TX, an equivalent isotropic radiated power EIRP value of the signal transmitted by the RDSS usually cannot be less than 3.5 dBW. Otherwise, the satellite fails to receive the signal from the terminal device. However, if transmit power is adjusted to be excessively high, power consumption of the transmitting device is high, and interference to a surrounding device is also caused. Therefore, how to effectively control the transmit power plays an important role in ensuring quality of the signal transmitted by the transmitter.

For how to effectively control the transmit power of the signal sent by the RDSS TX, a current solution includes a manner of adjusting the transmit power by fixing an RDSS gain and a manner of adjusting the transmit power by controlling the RDSS gain. The manner of adjusting the transmit power by fixing the RDSS gain means that the RDSS TX transmits a user signal (or a signal of the terminal device) at constant transmit power. However, when an environment in which the transmitted signal is located changes, quality of the transmitted signal is severely affected. In the manner of adjusting the transmit power by controlling the RDSS gain, the RDSS TX may determine, based on a signal carrier-to-noise ratio obtained by the RDSS RX, whether the transmit power of the RDSS TX needs to be adjusted, and use a main control unit to adjust a value of an attenuator (that is, control a transmit gain), to adjust the transmit power. However, in this manner, an additional circuit needs to be added to the RDSS TX to implement dynamic gain compensation. This not only increases chip complexity, but also increases an additional circuit area and power consumption overheads.

Based on this, this application proposes a transmit power adjustment method, so that transmit power of a signal can be adaptively adjusted in different application environments without increasing hardware cost overheads, to ensure communication quality of a transmitted signal.

The transmit power adjustment method provided in embodiments of this application may be mainly applied to but is not limited to an RNSS/RDSS transmission scenario, may be applied to but is not limited to a satellite communication system, and may include but is not limited to a new radio (new radio, NR) communication system or another communication system, for example, a future mobile communication system (for example, a 6G communication system).

For example, FIG. 1B is a diagram of a network architecture of a communication system to which an embodiment of this application is applicable. The communication system includes a satellite, a ground station, and a terminal device. A quantity of satellites, a quantity of ground stations, and a quantity of terminal devices in the communication system are not limited in this embodiment of this application. It should be understood that the network architecture of the communication system shown in FIG. 1B is merely an example, and constitutes no limitation on the network architecture of the communication system in embodiments of this application. Embodiments of this application may be further applied to a non-terrestrial communication system or a terrestrial communication system other than the communication system shown in FIG. 1B.

In embodiments of this application, the terminal device may be user equipment (user equipment, UE), an access terminal, a subscriber unit, a subscriber station, a mobile station, a remote station, a remote terminal, a mobile device, a user terminal, a user agent, or a user apparatus. During actual application, the terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. In this application, the foregoing device with a wireless transceiver function and a chip that may be disposed in the device are collectively referred to as a terminal device.

For example, the following are diagrams of structures of several RDSSs that are suitable for communication between a satellite and a terminal device according to embodiments of this application.

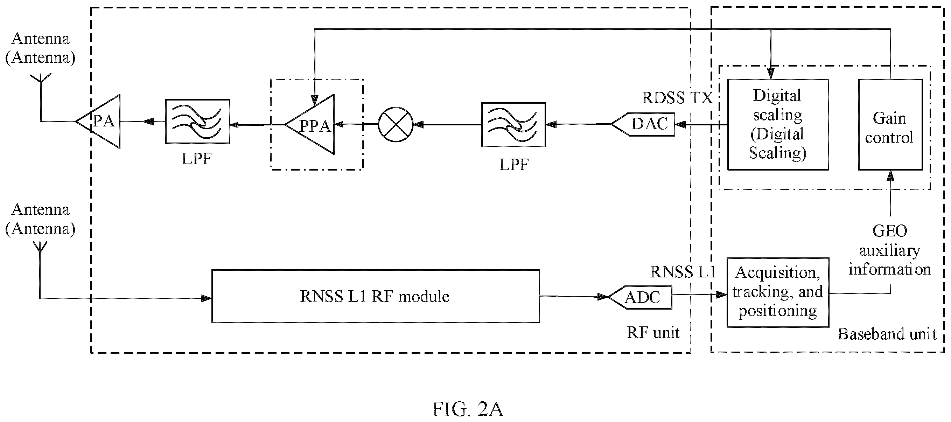

The RDSS shown in FIG. 2A includes an antenna module, a radio frequency (radio frequency, RF) unit, and a baseband unit. The RF unit may include a power amplifier (power amplifier, PA) module, a low-pass filter (low-pass filter, LPF) module, a pre-power amplifier (pre-power amplifier, PPA) module, an analog-to-digital conversion (analog-to-digital conversion, ADC) module, a digital-to-analog conversion (digital-to-analog conversion, DAC) module, and an RNSS L1 RF module. The baseband unit includes a digital scaling module, a gain control module, and an acquisition, tracking, and positioning module.

In the RDSS shown in FIG. 2A, an existing RNSS L1 acquires assistance information of a GEO satellite, and then inputs the assistance information of the satellite into the gain control module (that is, determines parameter thresholds corresponding to a threshold for adjusting transmit power by the PPA module and a threshold for adjusting the transmit power by the digital scaling module). The gain control module may provide a power adjustment parameter for the digital scaling module and the PPA module, so that the PPA module and the digital scaling module adjust transmit power of a signal, and then the RDSS TX sends the signal at transmit power obtained through adjustment.

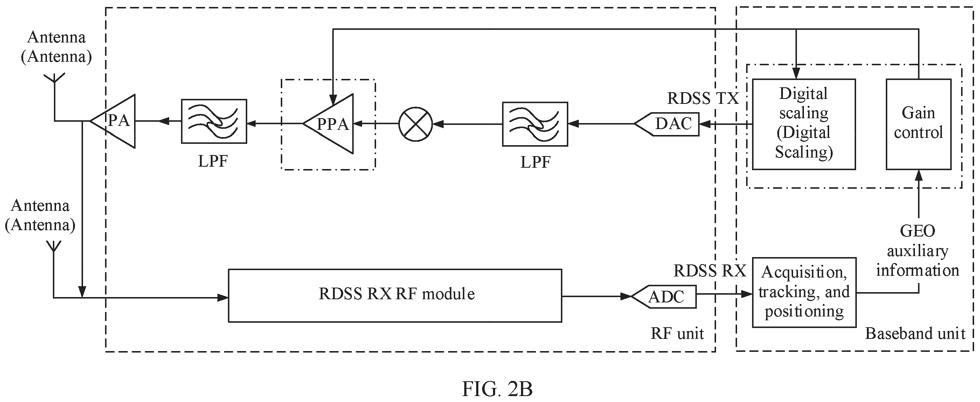

The RDSS shown in FIG. 2B includes an antenna module, an RF unit, and a baseband unit. The RF unit may include a PA module, an LPF module, a PPA module, an ADC module, a DAC module, and an RDSS RX RF module. The baseband unit includes a digital scaling module, a gain control module, and an acquisition, tracking, and positioning module.

In the RDSS shown in FIG. 2B, an existing RDSS RX is multiplexed to obtain, in real time, signal information fed back by a GEO satellite, and the signal information fed back by the GEO satellite is input into the gain control module. The gain control module determines, based on the signal information fed back by the satellite in real time, transmit power adjustment parameters of the PPA module and the digital scaling module, and provides the transmit power adjustment parameters to the PPA module and the digital scaling module, so that the PPA module and the digital scaling module adjust the transmit power in real time, and then the RDSS TX sends a signal in real time at transmit power obtained through adjustment.

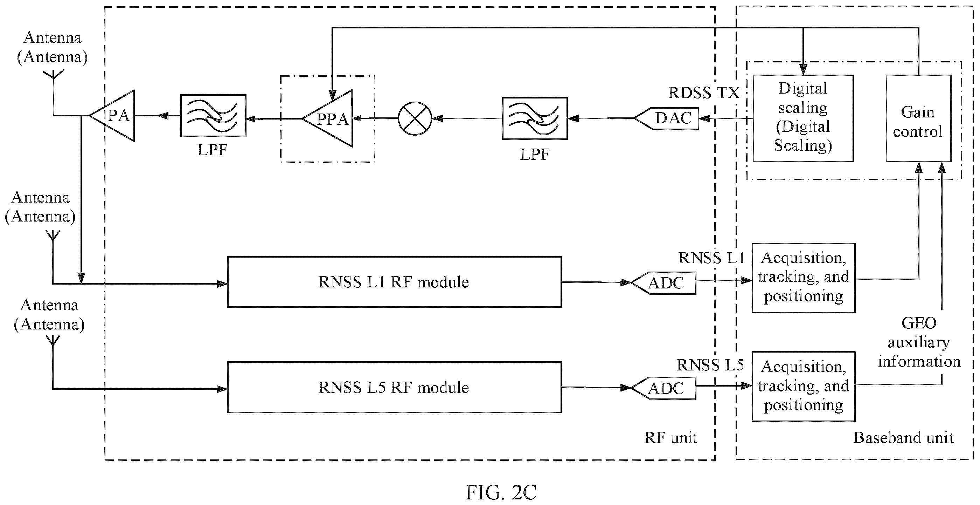

The RDSS shown in FIG. 2C includes an antenna module, an RF unit, and a baseband unit. The RF unit may include a PA module, an LPF module, a PPA module, an ADC module, a DAC module, an RNSS L5 RF module, and an RNSS L1 RF module. The baseband unit includes a digital scaling module, a gain control module, and an acquisition, tracking, and positioning module.

In the RDSS shown in FIG. 2C, an RNSS L5 is multiplexed to obtain assistance information of a GEO satellite, and the assistance information of the GEO satellite is input into the gain control module (determine parameter thresholds corresponding to a threshold for adjusting transmit power by the PPA module and a threshold for adjusting the transmit power by the digital scaling module). The gain control module may provide a power adjustment parameter for the digital scaling module and the PPA module, so that the PPA module and the digital scaling module adjust transmit power of a signal, and then the RDSS TX sends the signal at transmit power obtained through adjustment. At the same time, the existing RNSS L1 is further multiplexed to obtain, in real time, the signal information fed back by the GEO satellite, and the signal information fed back by the GEO satellite is input into the gain control module. The gain control module may adjust, based on the signal information fed back by the satellite in real time, transmit power adjustment parameters of the PPA module and the digital scaling module in real time, and provide the transmit power adjustment parameters to the PPA module and the digital scaling module in real time, so that the PPA module and the digital scaling module adjust transmit power in real time, and then the RDSS TX sends a signal in real time at transmit power obtained through adjustment.

The following describes the modules shown in FIG. 2A to FIG. 2C.

Antenna module: The module receives an RNSS L1/L5 signal and transmits an RDSS TX signal.

The RNSS L1/L5 may include frequencies of BeiDou systems such as B1I, B1C, B2a, and B2b, may also include frequency signals of global positioning systems such as GPS, GLONASS, and Galileo, and may also include frequency signals of regional positioning systems such as QZSS and IRNSS.

LPF module: The module filters signals to suppress impact of an unnecessary signal (such as interference) on a link and improve RNSS/RDSS performance.

PA module: The module is configured to amplify transmit power of an RDSS TX to ensure successful reception on a satellite side.

PPA module: The module is equivalent to a first module in embodiments of this application, and is mainly configured to amplify transmit power of an RDSS TX RF, to implement coarse power adjustment.

Digital scaling module: The module is equivalent to a second module in embodiments of this application, and is mainly configured to control transmit power of an RDSS TX baseband side, to implement fine power adjustment.

ADC module: The module performs analog-to-digital conversion. DAC module: The module performs digital-to-analog conversion. VGA module: The module controls an automatic gain of an input signal.

### RF unit:

When the RF unit includes an RDSS RX RF module or an RNSS L1/L5 RF module, the RF unit may include modules such as an LPF module and an ADC module, and may implement processing such as radio frequency receiving, AD conversion, filtering, and down-conversion on an RNSS signal. The module outputs a signal for a lower-level baseband signal processing module (such as acquisition and tracking).

When the RF unit includes an RDSS TX RF module, the RF unit may correspondingly include modules such as an LPF module and a DAC module, and may implement processing such as DA conversion, filtering, up-conversion, and radio frequency transmission on an RDSS signal. An input signal of the module is provided by an upper-level baseband signal processing module (such as packet assembly and modulation).

### Baseband unit:

When the baseband unit is an RDSS RX baseband unit or an RNSS L1/L5 baseband unit, the baseband unit may include a module like an acquisition, tracking, and positioning module, and may implement functions such as searching, tracking, and message parsing for a carrier frequency and a code phase of an RNSS signal. In this way, a location, a speed, time, and the like of a user machine can be calculated.

When the baseband unit is an RDSS TX baseband unit, the baseband unit may include modules such as packet assembly, modulation, and filtering, and may implement functions such as communication information assembly and noise reduction for a lower-level link.

The several diagrams of structures of the RDSS shown in FIG. 2A to FIG. 2C are merely examples, and cannot be specifically limited to a structure of an RDSS applicable to embodiments of this application. In comparison with the modules in the RDSS shown in FIG. 2A to FIG. 2C, the RDSS used in embodiments of this application may include more modules or fewer units or modules. This is not limited in embodiments of this application.

The technical solutions of this application are described below with reference to specific embodiments.

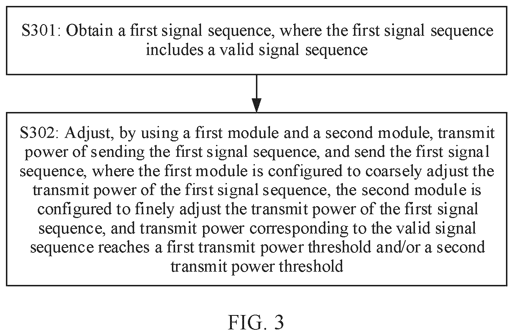

An embodiment of this application provides a transmit power adjustment method. The method is applicable to but is not limited to the communication system architecture in FIG. 1B, and a terminal device and a satellite may communicate with each other by using but is not limited to the RDSS shown in FIG. 2A to FIG. 2C. The method in this embodiment of this application may be performed by an independent transmitting apparatus, or may be performed by a component (for example, a processor, a chip, or a chip system) in the transmitting apparatus. For example, the transmitting apparatus is an RDSS TX, and the RDSS TX is connected to a module or a component (for example, a PPA module or a digital scaling module) in the RDSS. In addition, the transmitting apparatus may be located inside the terminal device, or may be independently located outside the terminal device and can communicate with the terminal device. A specific form of the transmitting apparatus and a device to which the transmitting apparatus belongs are not specifically limited in this application. In addition, ordinal numbers such as "first" and "second" mentioned below are used to distinguish between a plurality of objects for ease of description, but are not used to limit a sequence, a time sequence, a priority, or an importance degree of the plurality of objects. With reference to FIG. 3, a specific procedure of the method is as follows.

S301: Obtain a first signal sequence, where the first signal sequence includes a valid signal sequence.

For example, the transmitting apparatus obtains the first signal sequence from the terminal device; or a valid signal of the terminal device is first processed to obtain the first signal sequence, and then the first signal sequence is input to the RDSS TX for transmission.

For example, the valid signal sequence is a sequence of a normal and valid signal that is actually sent by the terminal device to a satellite base station through the RDSS TX.

In an implementation, the first signal sequence further includes an invalid signal sequence. For example, the invalid signal sequence may be a pseudo-random sequence.

In this embodiment of this application, the invalid signal sequence may be used to assist the transmitting apparatus in adjusting transmit power. To be specific, power increase or decrease adjustment is completed during sending of the invalid signal sequence, and interference caused by a strong monophonic tone to a surrounding telecommunication device can be avoided.

S302: Adjust, by using a first module and a second module, transmit power of sending the first signal sequence, and send the first signal sequence. The first module is configured to coarsely adjust the transmit power of the first signal sequence, and the second module is configured to finely adjust the transmit power of the first signal sequence. Transmit power corresponding to the valid signal sequence reaches a first transmit power threshold and/or a second transmit power threshold.

For example, the first module is a pre-power amplifier module (PPA module), and the second module is a digital scaling module (Digital scaling module).

In an implementation, that a control module in the RDSS adjusts, by using the first module and the second module, the transmit power of sending the first signal sequence may include the following:
When the transmit power is increased, a parameter change of the first module is controlled to increase the transmit power of the first signal sequence; and when the transmit power of the first signal sequence reaches the first transmit power threshold, a parameter change of the second module is controlled to increase the transmit power of the first signal sequence.

When the transmit power is decreased, a parameter change of the second module is controlled to decrease the transmit power of the first signal sequence; and when the transmit power of the first signal sequence reaches the second transmit power threshold, the parameter change of the first module is controlled to decrease the transmit power of the first signal sequence.

For example, the second transmit power threshold is greater than the first transmit power threshold, or the second transmit power threshold may be understood as a maximum value of the transmit power that can be further finely adjusted upwards based on the first transmit power threshold as a reference power threshold.

In an implementation, the first module obtains, by using a second receiving module, transmit power at which the transmitting apparatus sends an invalid signal, and adjusts the transmit power of the invalid signal in real time to reach the first transmit power threshold; and the second module obtains, by using the second receiving module, a value of the transmit power at which the transmitting apparatus sends the invalid signal, and adjusts the transmit power of the invalid signal in real time to reach the second transmit power threshold. The second receiving module is one of the following:
a receiving module of the radio determination satellite system RDSS, a receiving module of a global navigation satellite system GNSS, and a receiving module of a radio navigation satellite system RNSS.

The first transmit power threshold and the second transmit power threshold may be determined in but not limited to the following two manners.

Manner 1: The first transmit power threshold and the second transmit power threshold are determined based on assistance information of a communication satellite, where the assistance information includes signal feedback information of the communication satellite.

For example, a processing module of the transmitting apparatus (for example, the RDSS TX) determines the first transmit power threshold and the second transmit power threshold based on the assistance information of the communication satellite.

In an implementation, in Manner 1, before determining the first transmit power threshold and the second transmit power threshold, the transmitting apparatus (for example, the RDSS TX) further performs the following step:
obtaining the assistance information of the communication satellite from a first receiving module, where the first receiving module is a receiving module of the global navigation satellite system GNSS or a receiving module of the radio navigation satellite system RNSS.

The assistance information of the communication satellite is used to determine downlink signal strength of the communication satellite, or the assistance information of the communication satellite is downlink signal strength of the communication satellite. This is not specifically limited in this application.

For example, a GEO satellite transmits a downlink signal to the terminal device, and the terminal device performs measurement and calculation based on the downlink signal to obtain quality, strength, and downlink reference signal received power (reference signal received power, RSRP) (which may be equivalent to the assistance information of the communication satellite) of the downlink signal. Therefore, the transmitting apparatus obtains the quality, the strength, and the RSRP of the downlink signal of the satellite from the terminal device by using an RNSS L1 receiver (that is, the foregoing first receiving module), and then obtains the first transmit power threshold (that is, a transmit power threshold for coarse adjustment of the first module) and the second transmit power threshold (that is, a transmit power threshold for fine adjustment of the second module) through calculation based on the quality, the strength, and the RSRP of the downlink signal. Alternatively, the transmitting apparatus obtains, by using the RNSS L1 receiver, assistance information (for example, quality, strength, and RSRP of a downlink signal) of another satellite within a constraint range like a same elevation angle/azimuth angle of the GEO satellite, and selects an optimal satellite as the communication satellite. Further, the first transmit power threshold and the second transmit power threshold are determined based on assistance information obtained by the optimal communication satellite.

In Manner 1, the transmit power of the first signal sequence is adjusted based on the first transmit power threshold and the second transmit power threshold that are determined based on the assistance information of the satellite, so that the transmit power of the first signal sequence can be adaptively adjusted in different application environments, to ensure communication quality of transmitting the valid signal sequence.

Manner 2: The first transmit power threshold and the second transmit power threshold are preset.

In an implementation, in Manner 2, the transmitting apparatus (for example, the RDSS TX) further performs the following step:
obtaining feedback information of the valid signal sequence from the second receiving module; and adjusting, based on the feedback information of the valid signal sequence, the transmit power of the valid signal sequence in real time by controlling the parameter change of the second module. The second receiving module is one of the following:
a receiving module of the radio determination satellite system RDSS, a receiving module of the global navigation satellite system GNSS, and a receiving module of the radio navigation satellite system RNSS.

In Manner 2, the transmitting apparatus adjusts the transmit power of the first signal sequence based on the preset first transmit power threshold and the preset second transmit power threshold. When the transmitting apparatus transmits the valid signal sequence, even if the transmit power of the valid signal sequence reaches the preset first transmit power threshold and/or the preset second transmit power threshold, in actual transmission, due to external environment impact, the valid signal sequence received by a receive end (for example, a satellite) is inaccurate or of poor quality. Therefore, in this phase, an existing receiver (for example, an RDSS RX or a receiver of the RNSS) may be multiplexed to receive the feedback information of the valid signal sequence in real time, and monitor and adjust, in real time based on feedback information of the valid signal, the transmit power of sending the valid signal sequence. Therefore, the transmit power of the first signal sequence can be adaptively adjusted in different application environments, to ensure the communication quality of sending the valid signal sequence.

In conclusion, this application provides a transmit power adjustment method. The method may be performed by a transmitter (or a transmitting apparatus) or a component (for example, a chip, a chip system, or a processor) in the transmitter (or the transmitting apparatus). The method includes: obtaining the first signal sequence, where the first signal sequence includes the valid signal sequence; and controlling the first module and the second module to adjust the transmit power of the first signal sequence and send the first signal sequence. The first module is configured to coarsely adjust the transmit power of the first signal sequence, and the second module is configured to finely adjust the transmit power of the first signal sequence. The transmit power corresponding to the valid signal sequence reaches the first transmit power threshold and/or the second transmit power threshold. Therefore, it can be learned that, after obtaining the first signal sequence, the transmitter (or the apparatus) may steadily adjust the transmit power of the first signal sequence by using the first module and the second module, and correspondingly send the valid signal sequence in the first signal sequence when the transmit power reaches the first transmit power threshold and/or the second transmit power threshold. This can ensure transmission quality of the valid signal sequence.

The transmit power adjustment method provided in embodiments of this application shown in FIG. 3 is further described in detail below by using the following several specific embodiments.

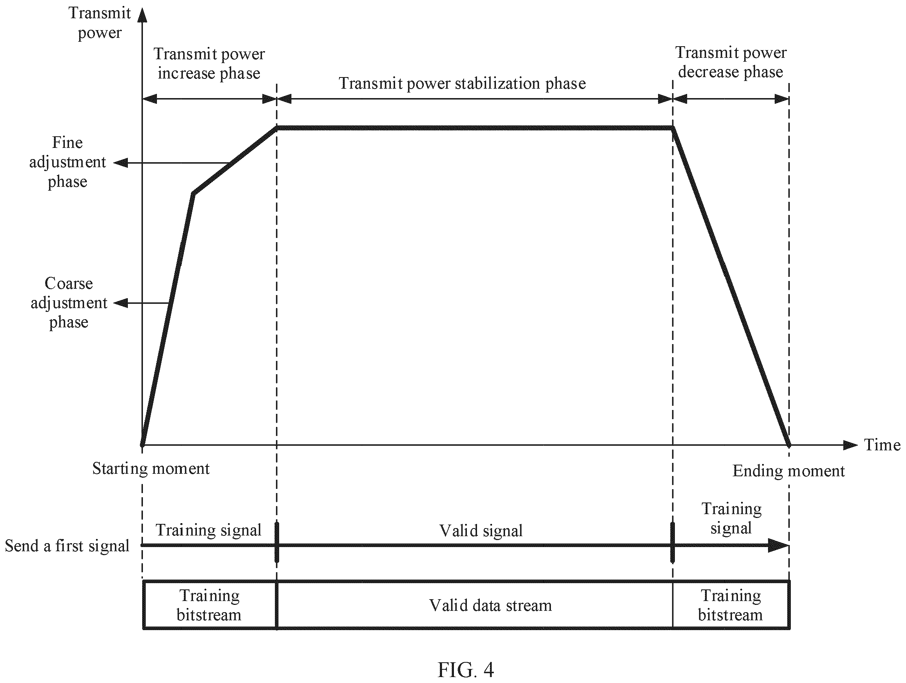

In the following several specific embodiments, that a terminal device sends a valid signal to a first communication satellite by using an RDSS is used as an example. Before the following specific embodiments are executed, a first signal may be first generated based on the valid signal of the terminal device (for example, the first signal is generated by the terminal device). As shown in FIG. 4, the first signal may include the valid signal (corresponding to a valid data stream) and a training signal (equivalent to an invalid signal in this application and corresponding to a training bitstream) of the terminal device.

### Specific embodiment 1

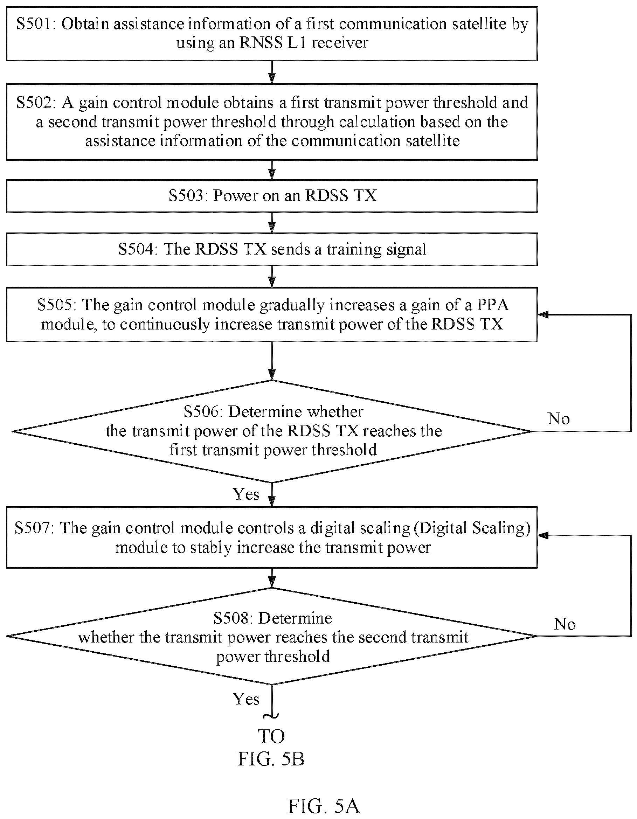

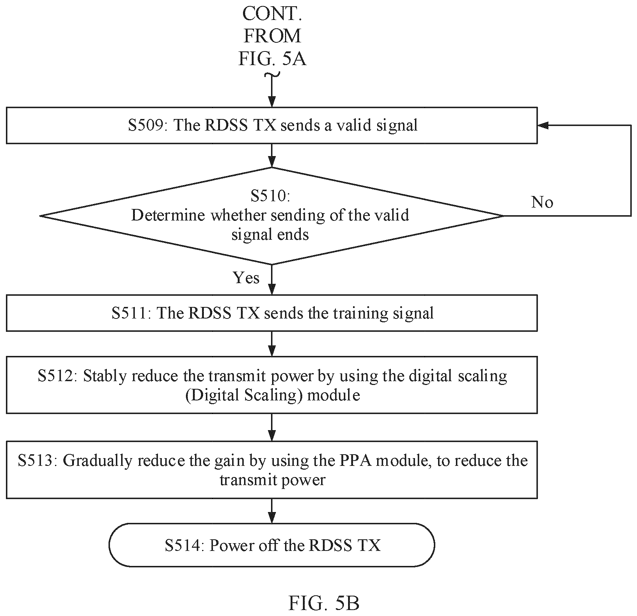

In the specific embodiment 1, the RDSS structure shown in FIG. 2A is mainly used to implement transmit power adjustment and signal transmission, that is, a first transmit power threshold and a second transmit power threshold are determined in Manner 1, and then transmit power of sending the first signal to the first communication satellite is adjusted based on the first transmit power threshold and the second transmit power threshold. Refer to FIG. 5A and FIG. 5B. A procedure of the specific embodiment 1 is as follows.

S501: Obtain assistance information of the first communication satellite by using an RNSS L1 receiver.

For example, after tracking a GEO satellite (namely, the first communication satellite), the RNSS L1 receiver (equivalent to the first receiving module in this application) obtains assistance information of the GEO satellite. The assistance information is used to determine strength of a signal received by the terminal device from the GEO satellite, or the assistance information is strength of a signal received by the terminal device from the GEO satellite.

Optionally, the RNSS L1 receiver receives assistance information from another communication satellite within a constraint range like a same elevation angle or azimuth angle of the GEO satellite, to select assistance information of an optimal communication satellite. Assistance information of each satellite is used to determine strength of a signal received by the terminal device from the satellite, or the assistance information of each satellite is strength of a signal received by the terminal device from the satellite.

Further, the RNSS L1 receiver inputs the assistance information of the first communication satellite to a gain control module, to perform step S502 below.

S502: The gain control module obtains the first transmit power threshold and the second transmit power threshold through calculation based on the assistance information of the communication satellite.

The first transmit power threshold is a reference threshold (or threshold) used when a PPA module adjusts transmit power of an RDSS TX, and the second transmit power threshold is a reference threshold (or threshold) used when a digital scaling module adjusts the transmit power of the RDSS TX.

In this embodiment of this application, step S502 may not be limited to being performed by the gain control module.

S503: Power on the RDSS TX.

In this embodiment of this application, powering on the RDSS TX is equivalent to turning on a power supply of the RDSS TX, to power on the RDSS TX to operate.

S504: The RDSS TX sends a training signal.

A signal sent by the RDSS TX in this phase is the training signal, and corresponds to a training bitstream.

In this embodiment of this application, the training signal may be understood as the invalid signal (namely, a non-valid signal) in this application, and is mainly used to assist in adjusting the transmit power of the valid signal to adjust a transmitted signal.

S505: The gain control module gradually increases a gain of the PPA module, to continuously increase the transmit power of the RDSS TX.

As shown in FIG. 4, step S505 belongs to a coarse adjustment phase. The gain control module increases the gain of the PPA module, and the gain control module supports a 9-bit adjustment range.

S506: Determine whether the transmit power of the RDSS TX reaches the first transmit power threshold.

For example, after step S505 is performed for a period of time, the gain control module determines whether the transmit power reaches the first transmit power threshold. If the transmit power reaches the first transmit power threshold (Y), perform step S507 below. If the transmit power does not reach the first transmit power threshold (N), return to step S505. To be specific, the gain of the PPA continues to be increased, to continue to increase the transmit power to send the training signal, until the transmit power reaches the first transmit power threshold, and perform step S507 below.

S507: The gain control module controls the digital scaling module to stably increase the transmit power.

For example, the gain control module controls the digital scaling module. Gain control precision of the gain control module may reach 0.05 dB, and an adjustment range of the transmit power from -7 dB to 7 dB is supported.

As shown in FIG. 4, step S507 belongs to a fine adjustment phase.

S508: Determine whether the transmit power reaches the second transmit power threshold.

For example, after step S507 above is performed for a period of time, the gain control module determines whether the transmit power reaches the second transmit power threshold. If the transmit power reaches the second transmit power threshold (Y), perform step S509 below. If the transmit power does not reach the second transmit power threshold (N), return to step S507. To be specific, the transmit power of the RDSS TX continues to be steadily increased by using the digital scaling module until the transmit power of the RDSS TX reaches the second transmit power threshold, and perform step S509 below.

Steps S504 and S505 above belong to a transmit power increase phase, and the RDSS TX sends the training signal in this phase.

S509: The RDSS TX sends the valid signal.

After the transmit power reaches the second transmit power threshold, the transmit power does not continue to be increased, and the RDSS TX correspondingly sends the valid signal (that is, corresponding to the valid data stream) in a transmit power stabilization phase.

S510: Determine whether sending of the valid signal ends?

For example, the gain control module may determine whether the current valid signal is completely sent. If the current valid signal is not completely sent, return to step S509 above, that is, continue to send the valid signal. If the current valid signal is completely sent, perform step S511 below, that is, send the training signal (corresponding to the training bitstream).

S511: The RDSS TX sends the training signal.

In step S511, the training signal (corresponding to the training bitstream, that is, a non-valid data stream) is sent through the RDSS TX, and step S512 starts to be performed below at the same time.

S512: Stably reduce the transmit power by using the digital scaling module.

For example, the gain control module controls the digital scaling module to stably reduce the transmit power. When the transmit power of the RDSS TX is less than the second transmit power threshold, step S513 is performed below.

S513: Gradually reduce the gain by using the PPA module, to reduce the transmit power.

For example, the gain control module controls the PPA module to gradually reduce the gain, to reduce the transmit power of the RDSS TX.

Steps S512 and S513 above are optional steps, and belong to a transmit power decrease phase. The transmit power is steadily decreased through coarse adjustment and fine adjustment of the gain, and accuracy and resolution of the gain are high, to prevent a power supply from being overloaded or unloaded.

S514: Power off the RDSS TX.

In this embodiment of this application, powering off the RDSS TX is equivalent to turning off a power supply of the RDSS TX to power off the RDSS TX.

It should be noted that the foregoing steps may be performed by corresponding modules, or may be performed by corresponding modules under control of a controller. This is not limited in this application.

It can be learned from the specific embodiment 1 that, the RNSS L1 receiver may capture and track the GEO satellite and obtain the assistance information of the GEO satellite, or may select the proper satellite based on the assistance information of the another satellite within the constraint range like the same elevation angle or azimuth angle of the GEO satellite. The first transmit power threshold (coarse adjustment power threshold) and the second transmit power threshold (fine adjustment power threshold) are determined based on the assistance information of the proper satellite. Then, the transmit power of the RDSS TX may be coarsely adjusted upwards by the RDSS TX by using the PPA module in the radio frequency unit. When the transmit power reaches the first transmit power threshold, the transmit power is finely adjusted upwards by using the digital scaling module in a baseband unit. When the transmit power of the RDSS TX is adjusted to reach the second transmit power threshold and in the transmit power stabilization phase, the valid signal is correspondingly sent, that is, the valid data stream of the terminal device is sent, so that stability of the transmit power for transmitting the valid signal can be ensured, and transmission quality of the valid signal is also ensured. In addition, the RDSS TX correspondingly sends the training signal when the transmit power of the RDSS TX does not reach the first transmit power threshold and/or the second transmit power threshold. This ensures that sent signals are continuous and there is no blank timeslot in an entire sending period.

### Specific embodiment 2

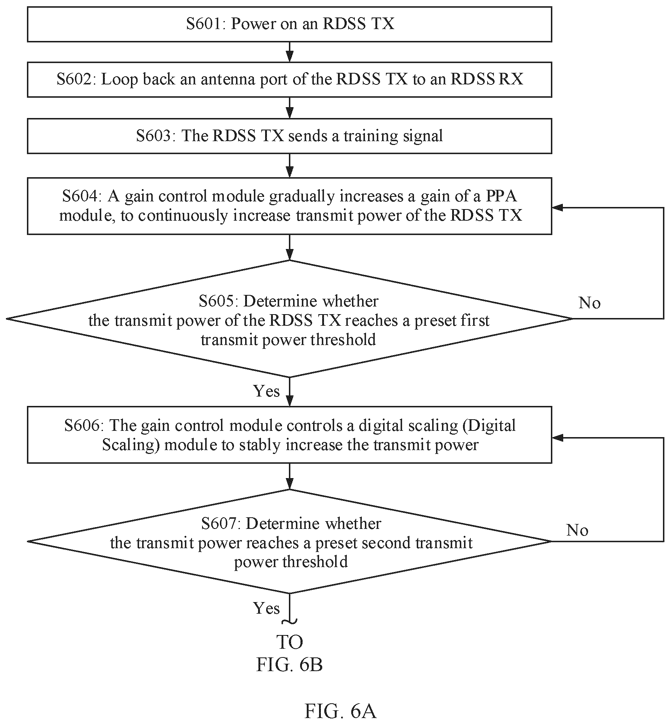

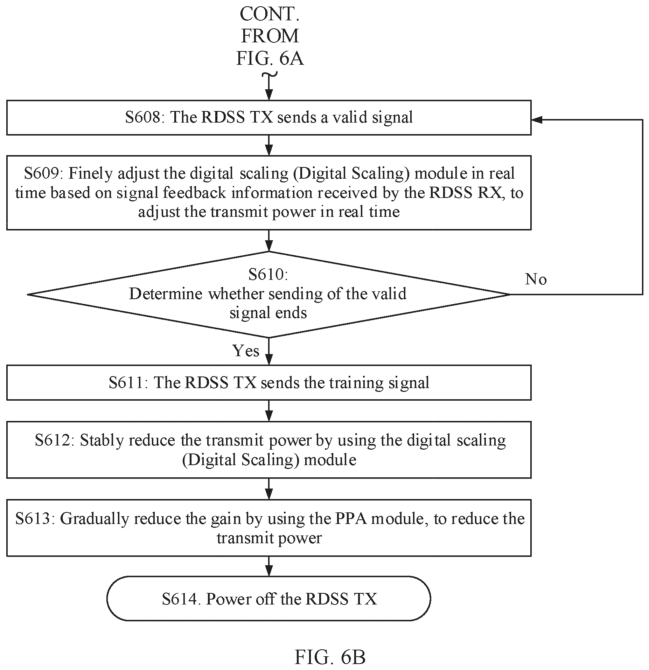

In the specific embodiment 2, transmit power adjustment and signal transmission are mainly implemented by using the RDSS structure shown in FIG. 2B. In other words, in Manner 2, the first transmit power threshold and the second transmit power threshold in the solutions of this application are preset. Then, an RDSS RX may be multiplexed to receive feedback information of a valid signal returned by the first communication satellite, to adjust, in real time, transmit power at which the RDSS TX sends the first signal to the first communication satellite. Refer to FIG. 6A and FIG. 6B. A procedure of the specific embodiment 2 is as follows:

S601: Power on the RDSS TX.

For step S601, refer to step S503 in FIG. 5A, that is, turn on the power supply of the RDSS TX to power on the RDSS TX to operate.

S602: Loop back an antenna port of the RDSS TX to the RDSS RX.

In this embodiment of this application, the antenna port of the RDSS TX is looped back to the RDSS RX, so that the antenna port of the RDSS TX can be connected to an antenna port of the RDSS RX.

S603: The RDSS TX sends a training signal.

For step S603, refer to step S504 in FIG. 5A.

S604: A gain control module gradually increases a gain of a PPA module, to continuously increase the transmit power of the RDSS TX.

As shown in FIG. 4, step S604 belongs to a coarse adjustment phase. The gain control module increases the gain of the PPA module, and the gain control module supports a 9-bit adjustment range.

For step S604, refer to step S505 in FIG. 5A.

S605: Determine whether the transmit power of the RDSS TX reaches the preset first transmit power threshold.

For example, after step S604 is performed for a period of time, the gain control module may obtain a value of the transmit power of the training signal in real time by using the RDSS RX, and determine whether the transmit power reaches the preset first transmit power threshold. If the transmit power reaches the preset first transmit power threshold (Y), perform step S606 below. If the transmit power does not reach the preset first transmit power threshold (N), return to step S604. To be specific, the gain of the PPA continues to be increased, to continue to increase the transmit power to send the training signal until the transmit power reaches the preset first transmit power threshold, and perform step S606 below.

For step S605, refer to step S506 in FIG. 5A.

S606: The gain control module controls a digital scaling module to stably increase the transmit power.

For example, the gain control module controls the digital scaling module. Gain control precision of the gain control module may reach 0.05 dB, and an adjustment range of the transmit power from -7 dB to 7 dB is supported.

As shown in FIG. 4, step S606 belongs to a fine adjustment phase.

For step S606, refer to step S507 in FIG. 5A.

S607: Determine whether the transmit power reaches the preset second transmit power threshold.

For example, after step S606 above is performed for a period of time, the gain control module may obtain the value of the transmit power of the training signal in real time by using the RDSS RX, and determine whether the transmit power reaches the preset second transmit power threshold. If the transmit power reaches the preset second transmit power threshold (Y), perform step S608 below. If the transmit power does not reach the preset second transmit power threshold (N), return to step S606. To be specific, the transmit power of the RDSS TX continues to be steadily increased by using the digital scaling module until the transmit power of the RDSS TX reaches the preset second transmit power threshold, and perform step S608 below.

For step S607, refer to step S508 in FIG. 5A.

Steps S604 to S607 above belong to a transmit power increase phase, and the RDSS TX sends the training signal in this phase.

S608: The RDSS TX sends the valid signal.

After the transmit power reaches the second transmit power threshold, the transmit power does not continue to be increased, and the RDSS TX correspondingly sends the valid signal (that is, corresponding to the valid data stream) in a transmit power stabilization phase.

For step S608, refer to step S509 in FIG. 5B.

S609: Finely adjust the digital scaling module in real time based on signal feedback information received by the RDSS RX, to adjust the transmit power in real time.

In this embodiment of this application, when step S609 is performed, feedback information of the valid signal sent by the first communication satellite may be received in real time by using the RDSS RX. For example, the feedback information of the valid signal is receiving quality or RSRP of the valid signal, and then the digital scaling module is finely adjusted in real time based on the feedback information, to adjust, in real time, the transmit power of sending the valid signal.

Optionally, the antenna port of RDSS TX may also be looped back to an RNSS receiver port, and the feedback information of the valid signal from the first communication satellite is received by using the RNSS receiver, for example, the receiving quality or the RSRP of the valid signal.

S610: Determine whether sending of the valid signal ends?

For example, the gain control module may determine whether the current valid signal is completely sent. If the current valid signal is not completely sent, return to perform steps S608 and S609 above, that is, continue to send the valid signal and adjust the transmit power in real time. If the current valid signal is completely sent, perform step S611 below, that is, send the training signal (corresponding to a training bitstream).

For step S610, refer to step S510 in FIG. 5B.

S611: The RDSS TX sends the training signal.

In step S611, the training signal (corresponding to the training bitstream, that is, a non-valid data stream) is sent through the RDSS TX, and step S612 starts to be performed below at the same time.

For step S611, refer to step S511 in FIG. 5B.

S612: Stably reduce the transmit power by using the digital scaling module.

For example, the gain control module controls the digital scaling module to stably reduce the transmit power. When the transmit power of the RDSS TX is less than the second transmit power threshold, step S613 is performed below.

For step S612, refer to step S512 in FIG. 5B.

S613: Gradually reduce the gain by using the PPA module, to reduce the transmit power.

For example, the gain control module controls the PPA module to gradually reduce the gain, to reduce the transmit power of the RDSS TX.

Steps S612 and S613 above are optional steps, and belong to a transmit power decrease phase. The transmit power is steadily decreased through coarse adjustment and fine adjustment of the gain, and accuracy and resolution of the gain are high, to prevent the power supply from being overloaded or unloaded.

For step S613, refer to step S513 in FIG. 5B.

S614: Power off the RDSS TX.

For step S614, refer to step S514 in FIG. 5B, that is, turn off a power supply of the RDSS TX to power off the RDSS TX.

It should be noted that the foregoing steps may be performed by corresponding modules, or may be performed by corresponding modules under control of a controller. This is not limited in this application.

It can be learned from the specific embodiment 2 that, the transmit power of the RDSS TX may be coarsely adjusted upwards by the RDSS TX by using the PPA module in a radio frequency unit. When the transmit power reaches the preset first transmit power threshold, the transmit power is steadily finely adjusted upwards by using the digital scaling module in a baseband unit. When the transmit power of the RDSS TX is adjusted to reach the preset second transmit power threshold and in the transmit power stabilization phase, the valid signal is correspondingly sent, that is, the valid data stream of the terminal device is sent. However, sending the valid signal based on the foregoing two preset transmit power thresholds may be affected by an actual environment. Therefore, when sending the valid signal, the RDSS TX further needs to receive the feedback information of the valid signal in real time by using the RDSS RX, to monitor in real time and finely adjust the transmit power of sending the valid signal. This ensures stability (that is, accuracy) of the transmit power for transmitting the valid signal and transmission quality of the valid signals. In addition, the RDSS TX correspondingly sends the training signal when the transmit power of the RDSS TX does not reach the first transmit power threshold and/or the second transmit power threshold. This ensures that sent signals are continuous and there is no blank timeslot in an entire sending period.

### Specific embodiment 3

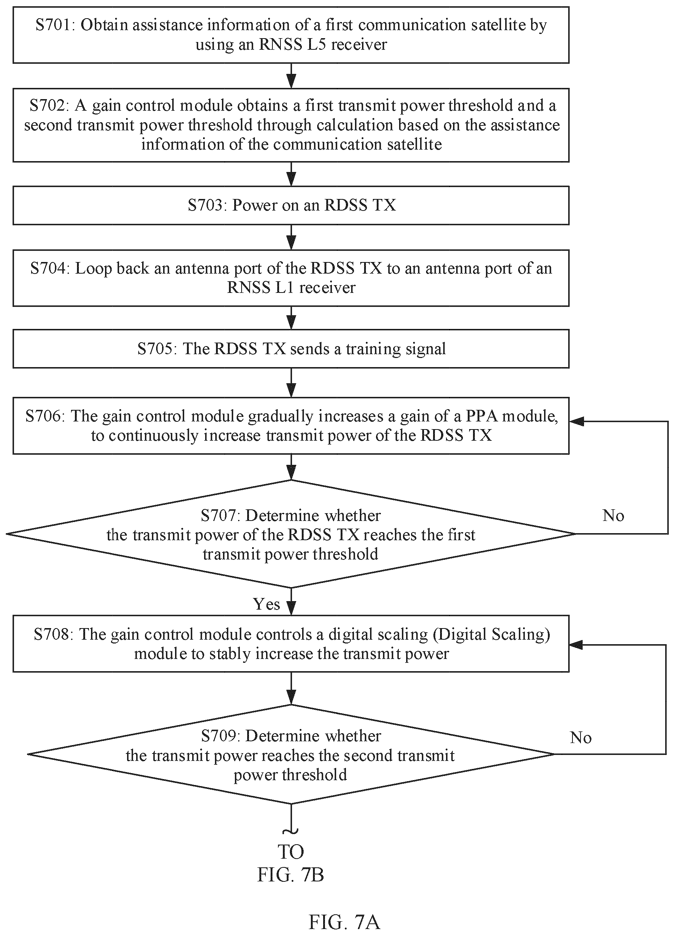

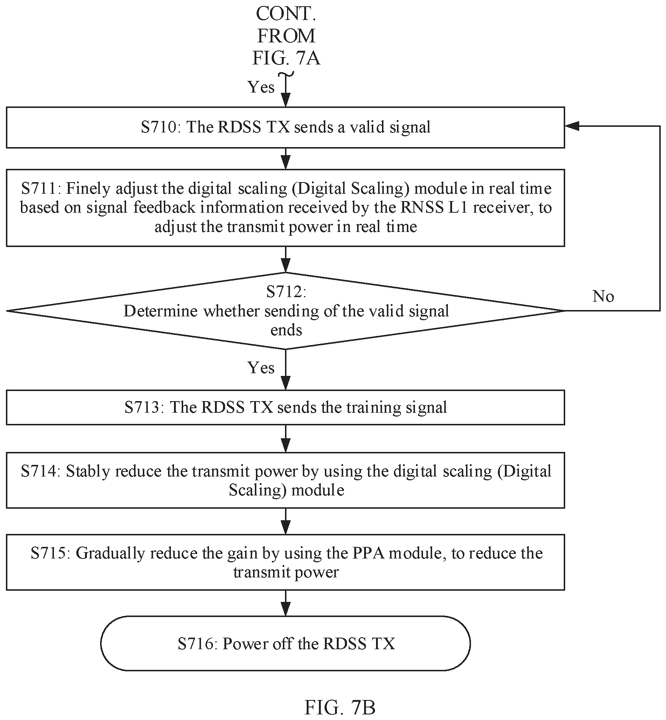

In the specific embodiment 3, transmit power adjustment and signal transmission are mainly implemented by using the RDSS structure shown in FIG. 2C. That is, in Manner 1 and Manner 2 above, a first transmit power threshold and a second transmit power threshold are determined based on assistance information of the first communication satellite. Transmit power of sending the first signal to the first communication satellite is adjusted based on the first transmit power threshold and the second transmit power threshold, and the RNSS L1 receiver is further multiplexed to adjust the transmit power of sending the first signal to the first communication satellite in real time. Refer to FIG. 7A and FIG. 7B. A procedure of the specific embodiment 3 is as follows:

S701: Obtain the assistance information of the first communication satellite by using an RNSS L5 receiver.

For example, after tracking a GEO satellite (namely, the first communication satellite), the RNSS L5 receiver obtains assistance information of the GEO satellite. The assistance information is used to determine strength of a signal received by the terminal device from the GEO satellite, or the assistance information is strength of a signal received by the terminal device from the GEO satellite.

Optionally, the RNSS L5 receiver receives assistance information from another communication satellite within a constraint range like a same elevation angle or azimuth angle of the GEO satellite, to select assistance information of an optimal communication satellite. Assistance information of each satellite may be strength of a signal received by the terminal device from the satellite.

Further, the RNSS L5 receiver inputs the assistance information of the first communication satellite to a gain control module, to perform step S702 below.

Optionally, when step S701 is performed, the assistance information of the first communication satellite may alternatively be obtained by using an RDSS L5 receiver.

S702: The gain control module obtains the first transmit power threshold and the second transmit power threshold through calculation based on the assistance information of the communication satellite.

The first transmit power threshold is a reference threshold (or threshold) used when a PPA module adjusts transmit power of an RDSS TX, and the second transmit power threshold is a reference threshold (or threshold) used when a digital scaling module adjusts the transmit power of the RDSS TX.

In this embodiment of this application, step S702 may not be limited to being performed by the gain control module.

S703: Power on the RDSS TX.

In this embodiment of this application, powering on the RDSS TX is equivalent to turning on a power supply of the RDSS TX, to power on the RDSS TX to operate.

S704: Loop back an antenna port of the RDSS TX to an antenna port of the RNSS L1 receiver.

For step S704, refer to step S602 in FIG. 6A, so that the RDSS TX can be connected to the RNSS L1 receiver.

Optionally, the antenna port of the RDSS TX is looped back to an antenna port of an RDSS RX.

S705: The RDSS TX sends a training signal.

A signal sent by the RDSS TX in this phase is the training signal, and corresponds to a training bitstream.

For step S705, refer to S504 in FIG. 5A or step S603 in FIG. 6A.

S706: The gain control module gradually increases a gain of the PPA module, to continuously increase the transmit power of the RDSS TX.

As shown in FIG. 4, step S706 belongs to a coarse adjustment phase. The gain control module increases the gain of the PPA module, and the gain control module supports a 9-bit adjustment range.

For step S706, refer to S505 in FIG. 5A or step S604 in FIG. 6A.

S707: Determine whether the transmit power of the RDSS TX reaches the first transmit power threshold.

For example, after step S706 is performed for a period of time, the gain control module may obtain a value of transmit power of the training signal in real time by using the RNSS L1 receiver, and determine whether the transmit power reaches the first transmit power threshold. If the transmit power reaches the first transmit power threshold (Y), perform step S708 below. If the transmit power does not reach the first transmit power threshold (N), return to step S706, that is, continue to increase the gain of the PPA, to continue to increase the transmit power to send the training signal until the transmit power reaches the first transmit power threshold, and perform step S708 below.

For step S707, refer to step S506 in FIG. 5A or step S605 in FIG. 6A.

S708: The gain control module controls the digital scaling module to stably increase the transmit power.

For example, the gain control module controls the digital scaling module. Gain control precision of the gain control module may reach 0.05 dB, and an adjustment range of the transmit power from -7 dB to 7 dB is supported.

As shown in FIG. 4, step S708 belongs to a fine adjustment phase.

For step S708, refer to step S507 in FIG. 5A or step S606 in FIG. 6A.

S709: Determine whether the transmit power reaches the second transmit power threshold.

For example, after step S708 above is performed for a period of time, the gain control module may obtain the value of the transmit power of the training signal in real time by using the RNSS L1 receiver, and determine whether the transmit power reaches the second transmit power threshold. If the transmit power reaches the second transmit power threshold (Y), perform step S710 below. If the transmit power does not reach the second transmit power threshold (N), return to step S708, that is, continue to stably increase the transmit power of the RDSS TX by using the digital scaling module until the transmit power of the RDSS TX reaches the second transmit power threshold, and perform step S710 below.

For step S709, refer to step S508 in FIG. 5A or step S607 in FIG. 6A.

Steps S706 to S709 above belong to a transmit power increase phase, and the RDSS TX sends the training signal in this phase.

S710: The RDSS TX sends a valid signal.

After the transmit power reaches the second transmit power threshold, the transmit power does not continue to be increased, and the RDSS TX correspondingly sends the valid signal (that is, corresponding to a valid data stream) in a transmit power stabilization phase.

For step S710, refer to step S509 in FIG. 5B or step S608 in FIG. 6B.

S711: Finely adjust the digital scaling module in real time based on signal feedback information received by the RNSS L1 receiver, to adjust the transmit power in real time.

In this embodiment of this application, when step S609 is performed, feedback information that is of the valid signal and that is sent by the first communication satellite may be received in real time by using the RNSS L1 receiver, for example, receiving quality or RSRP of the valid signal, and then the digital scaling module is finely adjusted in real time based on the feedback information, to adjust, in real time, the transmit power of sending the valid signal.

Optionally, the antenna port of the RDSS TX may also be looped back to the antenna port of the RDSS RX, and the feedback information of the valid signal from the first communication satellite is received by using the RDSS RX, for example, the receiving quality or the RSRP of the valid signal.

For step S711, refer to step S609 in FIG. 6B.

S712: Determine whether sending of the valid signal ends?

For example, the gain control module may determine whether the current valid signal is completely sent. If the current valid signal is not completely sent, return to perform steps S710 and S711, that is, continue to send the valid signal and adjust the transmit power in real time. If the current valid signal is completely sent, perform step S713 below, that is, send the training signal (corresponding to the training bitstream).

For step S712, refer to step S510 in FIG. 5B or step S610 in FIG. 6B.

S713: The RDSS TX sends the training signal.

In step S713, the training signal (corresponding to the training bitstream, that is, a non-valid data stream) is sent through the RDSS TX, and step S714 starts to be performed below at the same time.

For step S713, refer to step S511 in FIG. 5B or step S611 in FIG. 6B.

S714: Stably reduce the transmit power by using the digital scaling module.

For example, the gain control module controls the digital scaling module to stably reduce the transmit power. When the transmit power of the RDSS TX is less than the second transmit power threshold, step S715 is performed below.

For step S714, refer to step S512 in FIG. 5B or step S612 in FIG. 6B.

S715: Gradually reduce the gain by using the PPA module, to reduce the transmit power.

For example, the gain control module controls the PPA module to gradually reduce the gain, to reduce the transmit power of the RDSS TX.

Steps S714 and S715 above are optional steps, and belong to a transmit power decrease phase. The transmit power is steadily decreased through coarse adjustment and fine adjustment of the gain, and accuracy and resolution of the gain are high, to prevent the power supply from being overloaded or unloaded.

For step S715, refer to step S513 in FIG. 5B or step S613 in FIG. 6B.

S716: Power off the RDSS TX.

For step S716, refer to step S514 in FIG. 5B or step S614 in FIG. 6B, that is, turn off the power supply of the RDSS TX to power off the RDSS TX.

It should be noted that the foregoing steps may be performed by corresponding modules, or may be performed by corresponding modules under control of a controller. This is not limited in this application.

It can be learned from the specific embodiment 3 that, thresholds (namely, the first transmit power threshold and the second transmit power threshold) of the transmit power are first determined based on the acquired assistance information of the first communication satellite, and then based on the thresholds of the transmit power, and the transmit power of the RDSS TX may be coarsely adjusted upwards by the RDSS TX by using the PPA module in a radio frequency unit. When the transmit power reaches the preset first transmit power threshold, the transmit power is steadily finely adjusted upwards by using the digital scaling module in a baseband unit. When the transmit power of the RDSS TX is adjusted to reach the second transmit power threshold and in the transmit power stabilization phase, the valid signal is correspondingly sent, that is, the valid data stream of the terminal device is sent. In addition, when the RDSS TX sends the valid signal, the RNSS L1 receiver is further multiplexed to receive the feedback information of the valid signal in real time, to monitor in real time and finely adjust the transmit power of sending the valid signal. This ensures stability (that is, accuracy) of the transmit power for transmitting the valid signal and transmission quality of the valid signal. In addition, the RDSS TX correspondingly sends the training signal when the transmit power of the RDSS TX does not reach the first transmit power threshold and/or the second transmit power threshold. This ensures that sent signals are continuous and there is no blank timeslot in an entire sending period.

In the foregoing embodiments provided in this application, the method provided in embodiments of this application is described from a perspective of interaction between devices. To implement functions in the method provided in the foregoing embodiments of this application, a network device or a terminal device may include a hardware structure and/or a software module, and the foregoing functions may be implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

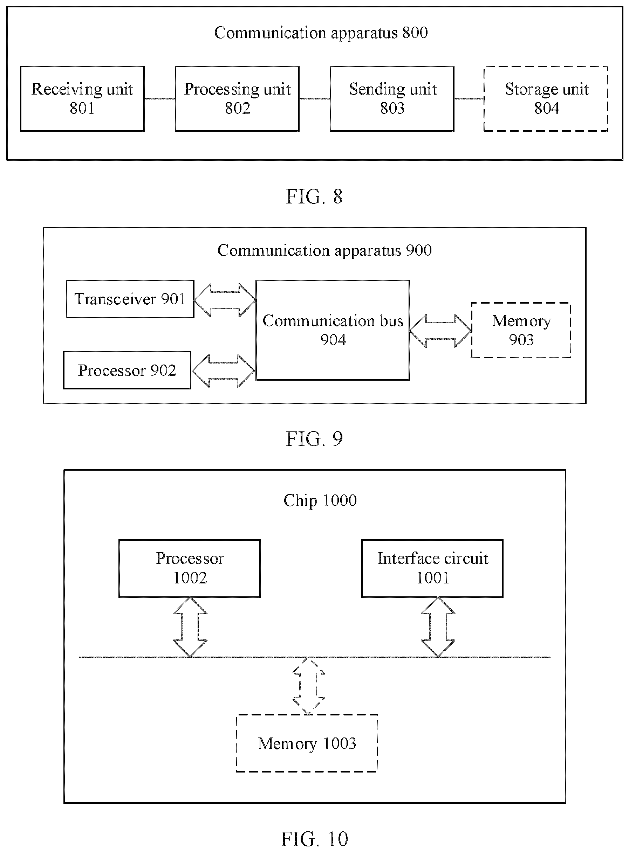

Same as the foregoing concept, as shown in FIG. 8, an embodiment of this application further provides a communication apparatus 800, configured to implement a function of the network device or the terminal device in the foregoing method. For example, the apparatus may be a software module or a chip system. In this embodiment of this application, the chip system may include a chip, or may include a chip and another discrete component. The communication apparatus 800 may include a receiving unit 801, a processing unit 802, and a sending unit 803.

Optionally, the communication apparatus 800 may further include a storage unit 804. The storage unit 804 is equivalent to a storage module, and may be configured to store instructions and/or data. The processing unit 802 may read the instructions and/or the data in the storage module, to enable the communication apparatus to implement the foregoing method embodiments.

In this embodiment of this application, a transceiver unit may also be referred to as a communication unit, and may include a sending unit and/or a receiving unit, which are respectively configured to perform sending and receiving steps of the network device or the terminal device in the foregoing method embodiments.

The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the method embodiments. For brevity, details are not described herein again.

The transceiver unit may also be referred to as a transceiver, a transceiver machine, a transceiver apparatus, or the like. The processing unit may also be referred to as a processor, a processing board, a processing module, a processing apparatus, or the like. Optionally, the receiving unit 801 may be configured to implement a receiving function, and the sending unit 803 may be configured to implement a sending function. The receiving unit 801 sometimes may also be referred to as a receiver machine, a receiver, a receive circuit, or the like. The sending unit 803 sometimes may also be referred to as a transmitter machine, a transmitter, a transmit circuit, or the like.

When the communication apparatus 800 performs the sending function in the procedure shown in FIG. 3 in the foregoing embodiment,
the receiving unit 801 is configured to obtain a first signal sequence, where the first signal sequence includes a valid signal sequence.

The processing unit 802 is configured to: control a first module and a second module to adjust transmit power of the first signal sequence, and send the first signal sequence by using the sending unit 803. The first module is configured to coarsely adjust the transmit power of the first signal sequence, and the second module is configured to finely adjust the transmit power of the first signal sequence. Transmit power corresponding to the valid signal sequence reaches a first transmit power threshold and/or a second transmit power threshold.

The foregoing is merely an example. The receiving unit 801, the processing unit 802, and the sending unit 803 may further perform other functions. For more detailed descriptions, refer to related descriptions in the method embodiment shown in FIG. 3. Details are not described herein again.

FIG. 9 shows a communication apparatus 900 according to an embodiment of this application. The communication apparatus shown in FIG. 9 may be an implementation of a hardware circuit of the communication apparatus shown in FIG. 8. The communication apparatus 900 is applicable to the flowchart shown above, and perform functions of the terminal device or the network device in the foregoing method embodiments. For ease of description, FIG. 9 shows only main components in the communication apparatus.

As shown in FIG. 9, the communication apparatus 900 may include a transceiver 901 and a processor 902. The transceiver 901 and the processor 902 are coupled to each other. It may be understood that the transceiver 901 may be a communication interface or an input/output interface, or may be an interface circuit like a transceiver circuit. Optionally, the communication apparatus 900 may further include a memory 903, configured to store instructions to be executed by the processor 902, store input data required for running the instructions by the processor 902, or store data generated after the processor 902 runs the instructions.

When the communication apparatus 900 is configured to implement the method shown in FIG. 3, the processor 902 is configured to implement a function of the processing unit 802, and the transceiver 901 is configured to implement a function of the receiving unit 801 and/or the sending unit 803.

In this embodiment of this application, a specific connection medium among the foregoing transceiver 901, processor 902, and memory 903 is not limited. In this embodiment of this application, the memory 903, the processor 902, and the transceiver 901 are connected through a communication bus 904 in FIG. 9. The bus is represented by using a thick line in FIG. 9. A manner of connection between other components is merely an example for description, and is not limited thereto. The bus may be classified into an address bus, a data bus, a control bus, and the like. For ease of representation, only one thick line is used to represent the bus in FIG. 9, but this does not mean that there is only one bus or only one type of bus.

When the foregoing communication apparatus is a chip, FIG. 10 is a simplified diagram of a structure of a chip. The chip 1000 includes an interface circuit 1001 and one or more processors 1002. Optionally, the chip 1000 may further include a bus.

The processor 1002 may be an integrated circuit chip and has a signal processing capability. In an implementation process, steps in the foregoing communication method may be implemented by using a hardware integrated logic circuit in the processor 1002, or by using instructions in a form of software. The processor 1002 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1002 may implement or perform the methods and steps that are disclosed in embodiments of this application. The general-purpose processor may be a microprocessor, or the processor may be any conventional processor or the like.

The interface circuit 1001 may be configured to send or receive data, instructions, or information. The processor 1002 may process data, instructions, or other information received through the interface circuit 1001, and send, through the interface circuit 1001, information obtained through processing.

Optionally, the chip further includes a memory 1003. The memory 1003 may include a read-only memory and a random access memory, and provide operation instructions and data for the processor. A part of the memory 1003 may further include a non-volatile random access memory (NVRAM).

Optionally, the memory stores an executable software module or a data structure, and the processor may perform a corresponding operation by invoking operation instructions (where the operation instructions may be stored in an operating system) stored in the memory.

Optionally, the chip may be used in the terminal device or the network device in embodiments of this application. Optionally, the interface circuit 1001 may be configured to output an execution result of the processor 1002. For the communication method provided in one or more embodiments of this application, refer to the foregoing embodiments. Details are not described herein again.

It should be noted that functions corresponding to the interface circuit 1001 and the processor 1002 may be implemented by using a hardware design, or may be implemented by using a software design, or may be implemented by using a combination of software and hardware. This is not limited herein.

An embodiment of this application further provides a computer-readable storage medium. The computer-readable storage medium stores computer instructions used to implement the method performed by a first communication apparatus in the foregoing method embodiments, and/or the computer-readable storage medium stores computer instructions used to implement the method performed by the terminal device or the network device (for example, a base station) in the foregoing method embodiments.

For example, when a computer program is executed by a computer, the computer is enabled to implement the method performed by the terminal device or the network device (for example, the base station) in the foregoing method embodiments.

An embodiment of this application further provides a computer program product including instructions. When the instructions are executed by a computer, the computer is enabled to implement the method performed by the terminal device in the foregoing method embodiments, and/or when the instructions are executed by a computer, the computer is enabled to implement the method performed by the network device in the foregoing method embodiments.

An embodiment of this application further provides a chip apparatus, including a processor, configured to invoke a computer program or computer instructions stored in a memory, so that the processor performs the transmit power adjustment method in embodiments shown in FIG. 3, and FIG. 5A and FIG. 5B to FIG. 7A and FIG. 7B.

In a possible implementation, an input of the chip apparatus corresponds to a receiving operation in the embodiments shown in FIG. 3, and FIG. 5A and FIG. 5B to FIG. 7A and FIG. 7B, and an output of the chip apparatus corresponds to a sending operation in the embodiments shown in FIG. 3, and FIG. 5A and FIG. 5B to FIG. 7A and FIG. 7B.

Optionally, the processor is coupled to the memory through an interface.

Optionally, the chip apparatus further includes the memory. The memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the transmit power adjustment method in the embodiments shown in FIG. 3, and FIG. 5A and FIG. 5B to FIG. 7A and FIG. 7B. The memory mentioned in any of the foregoing may be a read-only memory (read-only memory, ROM), another type of static storage device that can store static information and instructions, a random access memory (random access memory, RAM), or the like.

It should be noted that for ease and brevity of description, for explanations and beneficial effect of related content of any one of the communication apparatuses provided above, reference may be made to the corresponding communication method embodiments provided above. Details are not described herein again.

In this application, a hardware layer, an operating system layer running above the hardware layer, and an application layer running above the operating system layer may be further included between communication apparatuses. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communication medium. The communication medium includes any medium that enables a computer program to be transmitted from one place to another. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be properly defined as a computer-readable medium. For example, if software is transmitted from a website, a server, or another remote source through a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data by a magnetic means, and the disc copies data optically by a laser means. The foregoing combination should also be included in the protection scope of the computer-readable medium.

In conclusion, the foregoing descriptions are merely embodiments of this application and are not intended to limit the protection scope of this application. Any modification, equivalent substitution, and improvement made based on the disclosure of this application shall fall within the protection scope of this application.

## Claims

1. A transmit power adjustment method, comprising:
obtaining a first signal sequence, wherein the first signal sequence comprises a valid signal sequence; and
controlling a first module and a second module to adjust transmit power of the first signal sequence, and sending the first signal sequence, wherein the first module is configured to coarsely adjust the transmit power of the first signal sequence, the second module is configured to finely adjust the transmit power of the first signal sequence, and transmit power corresponding to the valid signal sequence reaches a first transmit power threshold and/or a second transmit power threshold.

2. The method according to claim 1, wherein the first transmit power threshold and the second transmit power threshold are determined based on assistance information of a communication satellite, and the assistance information comprises signal feedback information of the communication satellite; and
the method further comprises:
obtaining the assistance information of the communication satellite by using a first receiving module, wherein the first receiving module is a receiving module of a global navigation satellite system GNSS or a receiving module of a radio navigation satellite system RNSS.

3. The method according to claim 1, wherein the first transmit power threshold and the second transmit power threshold are preset.

4. The method according to any one of claims 1 to 3, wherein the method further comprises:
obtaining feedback information of the valid signal sequence by using a second receiving module; and
adjusting, based on the feedback information of the valid signal sequence, the transmit power of the valid signal sequence in real time by controlling a parameter change of the second module, wherein the second receiving module is one of the following:
a receiving module of a radio determination satellite system RDSS, a receiving module of the global navigation satellite system GNSS, and a receiving module of the radio navigation satellite system RNSS.

5. The method according to any one of claims 1 to 4, wherein adjusting the transmit power of the first signal sequence by using the first module and the second module comprises:
controlling a parameter change of the first module to increase the transmit power of the first signal sequence, and when the transmit power of the first signal sequence reaches the first transmit power threshold, controlling the parameter change of the second module to increase the transmit power of the first signal sequence; or
controlling the parameter change of the second module to reduce the transmit power of the first signal sequence, and when the transmit power of the first signal sequence reaches the second transmit power threshold, controlling a parameter change of the first module to reduce the transmit power of the first signal sequence.

6. The method according to any one of claims 1 to 5, wherein the first module is a pre-power amplifier module, and the second module is a digital scaling module.

7. The method according to any one of claims 1 to 6, wherein the first signal sequence further comprises an invalid signal sequence, and transmit power corresponding to the invalid signal sequence is less than the first transmit power threshold and/or the second transmit power threshold.

8. The method according to claim 7, wherein the invalid signal sequence is a pseudo-random sequence.

9. A transmit power adjustment system, comprising a receiver, a controller, a transmitter, a first module, and a second module, wherein
the receiver is configured to obtain a first signal sequence; and
the controller is configured to: control the first module and the second module to adjust transmit power of the first signal sequence, and send the first signal sequence by using the transmitter, wherein the first module is configured to coarsely adjust the transmit power of the first signal sequence, the second module is configured to finely adjust the transmit power of the first signal sequence, the first signal sequence comprises a valid signal sequence, and transmit power corresponding to the valid signal sequence reaches a first transmit power threshold and/or a second transmit power threshold.

10. The system according to claim 9, wherein the first transmit power threshold and the second transmit power threshold are determined based on assistance information of a communication satellite, and the assistance information comprises signal feedback information of the communication satellite; and
the receiver is further configured to obtain the assistance information of the communication satellite by using a first receiver, wherein the first receiver is a receiver of a global navigation satellite system GNSS or a receiver of a radio navigation satellite system RNSS.

11. The system according to claim 9, wherein the first transmit power threshold and the second transmit power threshold are preset.

12. The system according to any one of claims 9 to 11, wherein the receiver is further configured to:
obtain feedback information of the valid signal sequence by using a second receiver; and
the controller is further configured to control a parameter change of the second module to adjust, in real time based on the feedback information of the valid signal sequence, the transmit power at which the transmitter sends the valid signal sequence, wherein the second receiver is one of the following:
a receiver of a radio determination satellite system RDSS, a receiver of the global navigation satellite system GNSS, and a receiver of the radio navigation satellite system RNSS.

13. The system according to any one of claims 9 to 12, wherein when adjusting, by using the first module and the second module, the transmit power at which the transmitter sends the first signal sequence, the controller is specifically configured to:
control a parameter change of the first module to increase the transmit power of the first signal sequence, and when the transmit power of the first signal sequence reaches the first transmit power threshold, control the parameter change of the second module to increase the transmit power of the first signal sequence; or
control the parameter change of the second module to reduce the transmit power of the first signal sequence, and when the transmit power of the first signal sequence reaches the second transmit power threshold, control a parameter change of the first module to reduce the transmit power of the first signal sequence.

14. The system according to any one of claims 9 to 13, wherein the first module is a pre-power amplifier module, and the second module is a digital scaling module.

15. The system according to any one of claims 9 to 14, wherein the first signal sequence further comprises an invalid signal sequence, and transmit power corresponding to the invalid signal sequence is less than the first transmit power threshold and/or the second transmit power threshold.

16. The system according to claim 15, wherein the invalid signal sequence is a pseudo-random sequence.

17. A communication apparatus, comprising a unit or a module configured to perform the method according to any one of claims 1 to 8.

18. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 8 through a logic circuit or by executing code instructions.

19. A computer program product, comprising a computer program, wherein when the computer program is executed by a communication apparatus, the method according to any one of claims 1 to 8 is implemented.

20. A computer-readable storage medium, wherein the storage medium stores a computer-readable program or instructions; and when the computer program or the instructions are executed by a communication apparatus, the method according to any one of claims 1 to 8 is implemented.
